**Europäisches Patentamt**

**European Patent Office**

**Office européen des brevets**

(19)

(11) Veröffentlichungsnummer : **0 291 781 B1**

(12) **EUROPÄISCHE PATENTSCHRIFT**

(45) Veröffentlichungstag der Patentschrift :
03.04.91 Patentblatt 91/14

(51) Int. Cl.⁵ : **A47B 88/00**

(21) Anmeldenummer : **88107272.2**

(22) Anmeldetag : **06.05.88**

(54) Schublade.

(30) Priorität : **22.05.87 AT 1312/87**

(43) Veröffentlichungstag der Anmeldung :
**23.11.88 Patentblatt 88/47**

(45) Bekanntmachung des Hinweises auf die
Patenterteilung :
**03.04.91 Patentblatt 91/14**

(84) Benannte Vertragsstaaten :
**AT DE GB IT**

(56) Entgegenhaltungen :
**WO-A-85/05541**
**DE-A- 3 120 181**
**DE-A- 3 611 479**
**US-A- 4 002 261**
**US-A- 4 108 520**

(73) Patentinhaber : **Julius Blum Gesellschaft
m.b.H.
Industriestrasse 1
A-6973 Höchst (AT)**

(72) Erfinder : **Röck, Erich
Küferstrasse 7
A-6973 Höchst (AT)**
Erfinder : **Brunner, Josef
Augasse 4
A-6973 Höchst (AT)**
Erfinder : **Brüstle, Klaus
Fellentorstrasse 23
A-6923 Lauterach (AT)**

(74) Vertreter : **Torggler, Paul, Dr. et al
Wilhelm-Greil-Strasse 16
A-6020 Innsbruck (AT)**

## Beschreibung

Die Erfindung betrifft eine Schublade mit zwei parallelen Schubladenzargen, insbesondere aus Metall, die im wesentlichen die beiden Seitenwände der Schublade bilden und die jeweils eine Zargenschiene für eine Laufrolle eines Schubladenauszuges aufweisen bzw. tragen, und mit einer lösbar mit den Schubladenzargen verbindbaren Frontwand, die im montierten Zustand hinter den Stirnseiten der Schubladenzargen zwischen den Schubladenzargen liegt.

Hinsichtlich der Lage der Frontplatten bzw. Frontwände in bezug auf die Schubladenzargen, können im wesentlichen zwei verschiedene Typen unterschieden werden : Beim ersten Typ erstrechen sich die Frontplatten der Breite nach zumindest über die gesamte Schubladenbreite und liegen im montierten Zustand an den Stirnseiten der Schubladenzargen an. Zur schnellen Montage der Frontplatten sind bei diesem Schubladentyp einige Schnellverbinder mit den Schubladenzargen bekannt. Dabei werden die mit vormontierten Beschlagteilen versehenen Frontplatten günstigerweise von vorne auf die Schubladenzargen der sonst bereits fertigen Schublade aufgesteckt oder eingehängt und dann durch eine Verbindungseinrichtung, beispielsweise einen Spannexzenter, gegen die Stirnseiten der Schubladenzargen gezogen, wobei die Hinterseite der Frontplatten als an den Stirnseiten anliegender Anschlag dient (z. B. DE-A-3120181).

Beim zweiten Schubladentyp liegen die Frontwände im montierten Zustand zwischen den Schubladenzargen. Derartige Schubladen werden im allgemeinen als sogenannte Innenauszüge eingesetzt, bei denen eine vor der Frontwand zugeordnete Frontblende, beispielswiese eine Kastentür, in geschlossenem Zustand eine oder mehrere Frontwände von Schubladen verdeckt. Zur Verbindung solcher zwischen den Schubladenzargen liegenden Frontwände mit den Schubladenzargen ist es bekannt, speziell ausgebildete Schubladenzargen mit nach innen abstehenden Befestigungswinkeln vorzusehen, an die dann die Frontwand von innen anschraubbar ist (DE-A-36 11 479). Der Zusammenbau einer solchen Schublade ist relativ zeitaufwendig. Weiters besteht die Gefahr, daß die zum Zusammenbau nötigen losen Befestigungsschrauben verlorengehen. Ein anderer Nachteil ist darin zu sehen, daß spezielle Zargen-Konstruktionen mit Befestigungswinkeln verwendet werden, welche sich ausschließlich nur für diese zwischen den Zargen liegenden Frontwände eignen.

Aufgabe der Erfindung ist es, eine Schublade der eingangs genannten Gattung zu schaffen, bei der die im montierten Zustand hinter den Stirnseiten der Schubladenzargen zwischen den Schubladenzargen liegende Frontwand einfach, rasch und dennoch fest mit den Schubladenzargen verbindbar ist. Weiters soll es möglich sein, für diese Schublade dieselben Schubladenzargen zu verwenden, wie für jene Schubladen, bei denen die Frontplatte im montierten Zustand stirnseitig an den Schubladenzargen anliegt.

Dies wird erfindungsgemäß dadurch erreicht, daß pro Schubladenzarge ein Verbindungsbeschlag mit einem an der Frontwand vormontierten Beschlagteil vorgesehen ist, der zumindest einen, im wesentlichen seitlich neben der Frontwand liegenden Anschlag aufweist, und daß pro Schubladenzarge eine Spanneinrichtung vorgesehen ist, über die eine im wesentlichen in Zargenlängsrichtung gerichtete Zugkraft auf das an der Frontwand vormontierte Beschlagteil ausgeübt wird, wobei dessen Anschlag bzw. Anschläge gegen die Stirnseite der jeweiligen Schubladenzarge gezogen wird bzw. werden.

Durch den seitlich neben der Frontwand am vormontierten Beschlagteil ausgebildeten Anschlag und das auf verschiedene Weisen einfach realisierbare Heranziehen dieses Anschlags an die Stirnseiten ist nunmehr auch bei einer Schublade mit zwischen den Schubladenzargen liegender Frontwand, bei der ja die Frontwand selbst nicht als stirnseitiger Anschlag dienen kann, eine rasche und feste Verbindung Frontwand – Schubladenzargen möglich. Allfällige Toleranzen können bei dieser Verbindungsart ausgeglichen werden. Im allgemeinen wird der Anschlag vorteilhafterweise im wesentlichen seitlich neben der Vorderfläche der Frontwand liegen, weil dann umgekehrt die Frontwand vorne in etwa bündig mit den Stirnseiten der Schubladenzargen abschließt.

Weiters besteht bei Verwendung des erfindungsgemäßen Verbindungsbeschlages die Möglichkeit, für einen Innenauszug dieselben Schubladenzargen zu verwenden wie für die bisher üblichen Schubladen mit auf den Stirnseiten der Schubladenzargen angeordneten Frontplatten. Dies bietet Vorteile bei der Lagerhaltung und bei der Herstellung, da bei der nunmehr weitgehend automaiisierten Möbelproduktion, bei der sogar die Löcher zur Befestigung der zu den Schubladenzargen gehörigen Korpusschienen im Korpus bereits vorgebohrt werden, zwischen Innenauszug und sonstigen Schubladen bis auf die Frontplatte und deren Beschläge (und gegebenenfalls einen etwas kürzeren Baden bei einem Innenauszug) keine Unterscheidung mehr getroffen werden muß.

Um die Montage der Frontwand auf eine sonst bereits fertige Schublade mit einem erfindungsgemäßen Verbindungsbeschlag zu erleichtern, sieht eine bevorzugte Ausführungsform der Erfindung vor, daß der mit der Frontwand verbundene Beschlagteil von der Stirnseite der Schubladenzarge aus im wesentlichen in Zargenlängsrichtung auf die zugehörige Schubladenzarge aufschiebbar bzw. in diese einschiebbar und hierauf durch die Spanneinrichtung gegen die Stirnseite der jeweiligen Schubladenzarge ziehbar ist, wobei der Anschlag bzw. Anschläge des Beschlagteiles an der Stirnseite der jeweiligen Schubladenzarge satt zur Anlage kommt bzw. kommen.

Insbesondere bei Hohlprofil-Aluminiumzargen ist es gemäß einem bevorzugten Merkmal der Erfindung günstig, wenn der mit der Frontwand vormontierte Beschlagteil mindestens einen Vorsprung mit wenigstens einer seitlich von diesem abstehenden Nase aufweist, der im wesentlichen im rechten Winkel zur Frontwand verläuft und der von der Stirnseite der Schubladenzarge her in diese einsetzbar ist, wobei eine über einen in der Schubladenzarge vorgesehenen Spannexzenter in Zargenlängsrichtung ziehbare Federzunge die Nase(n) des Vorsprunges des Beschlagteiles hintergreift und den Beschlagteil zur Schubladenzarge zieht.

Zur Montage der Frontwand wird diese samt den darauf vormontierten Beschlagteilen in die Schubladenzargen eingeschoben, bis die Federzungen links und rechts hinter die Nasen der Vorsprünge der Beschlagteile schnappen. Hierauf können die Federzungen, die über die Nasen die Beschlagteile mitnehmen, über den Spannexzenter nach innen bewegt werden, bis die Anschläge an den Beschlagteilen satt an den Stirnseiten der jeweiligen Schubladenzargen anliegen.

Insbesondere bei Schubladenzargen aus Stahl, die meist Z-förmig profiliert sind, kann günstigerweise vorgesehen sein, daß der mit der Frontwand vormontierte Beschlagteil eine im wesentlichen rechtwinkelig zur Frontwand verlaufende vertikale Haltefläche aufweist, daß als Spannvorrichtung im wesentlichen eine Klemmplatte vorgesehen ist, welche durch eine Öffnung oder Aussparung im vertikalen Steg einer im wesentlichen Z-förmig profilierten Schubladenzarge mit dem auf der anderen Seite des Steges mit der Haltefläche am Steg anliegenden Beschlagteil verschraubbar ist, wobei sich eine an der Klemmplatte ausgebildete Schrägfläche an der Schubladenzarge abstützt und damit eine im wesentlichen in Zargenlängsrichtung wirkende Kraft auf die Klemmplatte bzw. den Beschlagteil ausübt.

Damit keine gesonderten Befestigungsteile verwendet werden, die verlorengehen könnten, kann vorgesehen sein, daß die Klemmplatte über die zum Zusammenschrauben mit dem Beschlagteil vorgesehene Schraube bereits vor dem Einsetzen der Frontwand zwischen die Schubladenzargen lose an diesem Beschlagteil gehalten ist.

Eine einfache und sichere Verbindung zwischen dem vormontierten Beschlagteil und der Frontwand ist gemäß einer bevorzugten Ausführungsform der Erfindung dadurch gegeben, daß der Beschlagteil eine – im montierten Zustand – quer zur Zargenlängsrichtung weisende Vertiefung (Nut) zur Aufnahme der Frontwand aufweist, wobei die Frontwand in dieser Vertiefung vorzugsweise festschraubbar ist. Die Frontwand kann dabei als einfache Platte ausgeführt sein, ohne die bei Beschlägen oft üblichen Ausnehmungen zur Aufnahme von Beschlagteilen aufweisen zu müssen. Allenfalls können Löcher für eine Verschraubung vorgebohrt sein.

Weitere vorteilhafte Ausgestalkungen der Schublade sind Gegenstand der Ansprüche 4, 5, 9 und 11-16. Die Erfindung betrifft weiterhin Beschlagteile nach dem unabhängigen Anspruch 17. Vorteilhafte Ausgestalkungen dieser Beschlagteile sind Gegenstand der Ansprüche 18-25.

Die Erfindung wird im folgenden anhand von Ausführungsbeispielen durch die Zeichnungen näher erläutert.

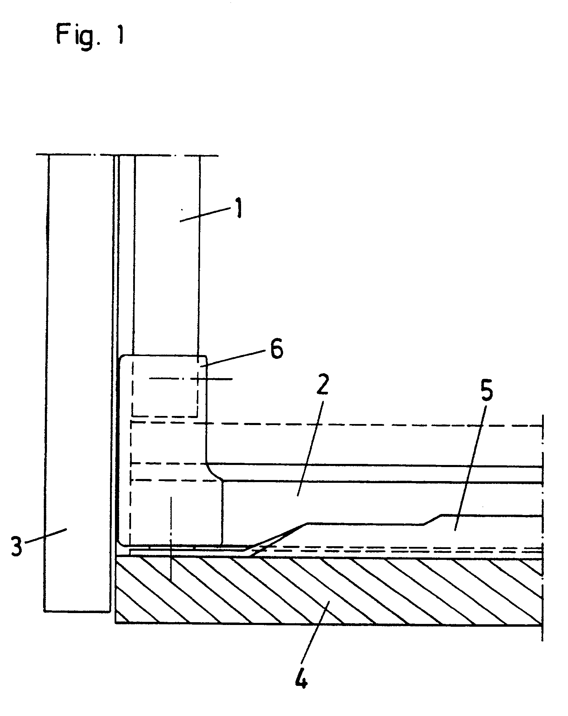

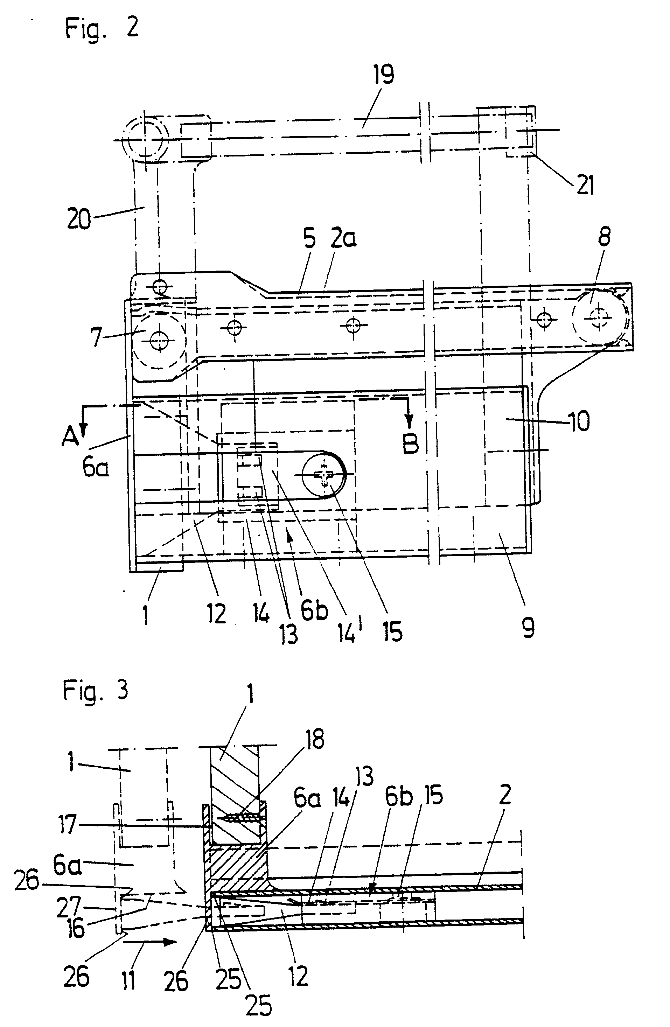

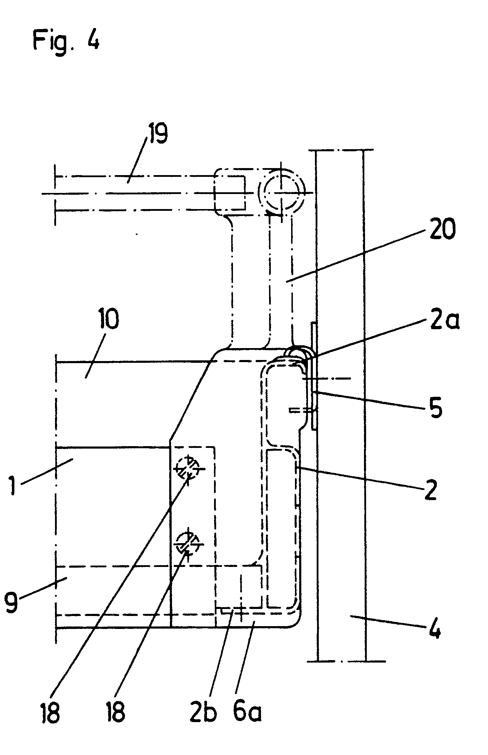

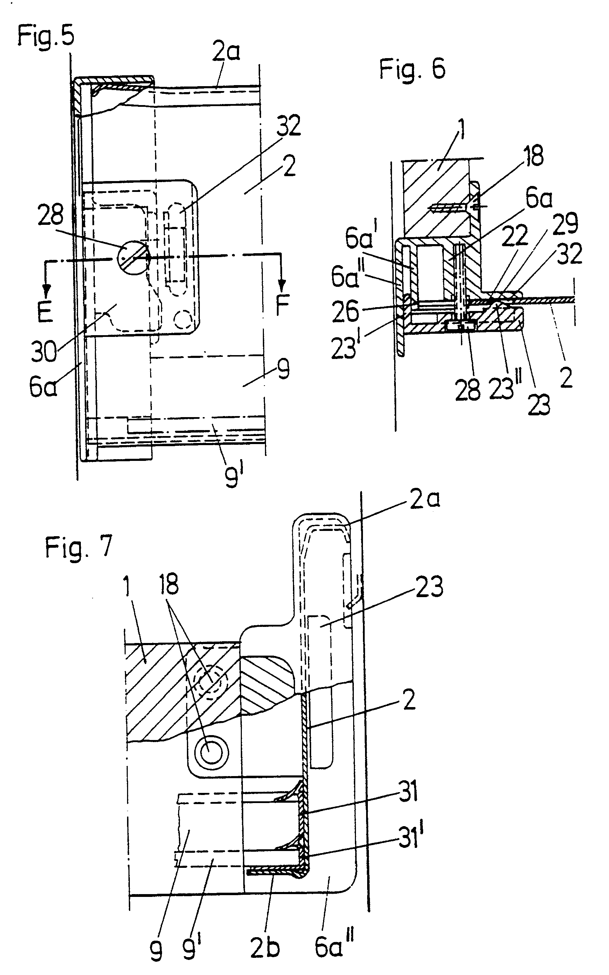

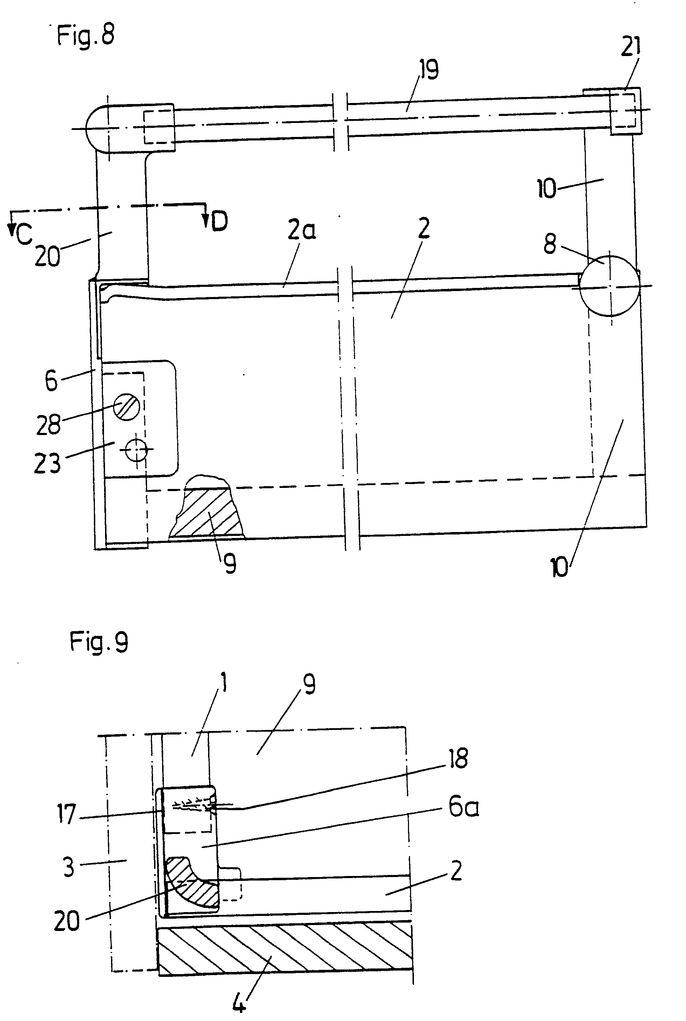

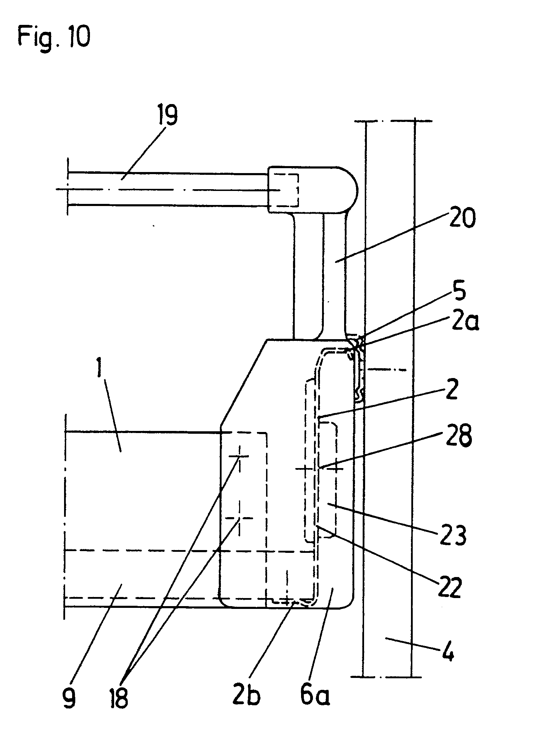

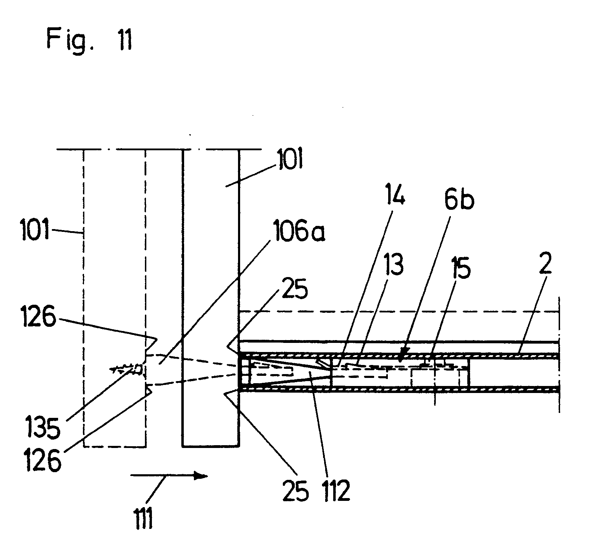

Es zeigen die Fig. 1 eine schematische Oberansicht auf einen Teil einer als Innenauszug verwendeten erfindungsgemäßen Schublade, die Fig. 2 eine Seitenansicht auf ein Ausführungsbeispiel der erfindungsgemäßen Schublade mit einer Hohlprofil-Aluminiumzarge, die Fig. 3 einen Schnitt gemäß der Linie A-B der Fig. 2, die Fig. 4 eine Vorderansicht auf einen Teil des in den Fig. 2 und 3 gezeigten Ausführungsbeispiels, die Fig. 5 eine Seitenansicht auf den vorderen Bereich einer Schublade mit Z-förmig profilierter Stahlzarge, die Fig. 6 einen Schnitt gemäß der Linie E-F der Fig. 5, die Fig. 7 eine Vorderansicht auf einen Teil des in den Fig. 5 und 6 gezeigten Ausführungsbeispieles, die Fig. 8 eine Seitenansicht auf ein weiteres Ausführungsbeispiel der erfindungsgemäßen Schublade mit einer Z-förmig profilierten Stahlzarge, die Fig. 9 einen Schnitt gemäß der Linie C-D der Fig. 8, die Fig. 10 eine Vorderansicht auf einen Teil des in den Fig. 8 und 9 gezeigten Ausführungsbeispieles und die Fig. 11 die in Fig. 3 dargestellte Schubladenzarge, jedoch mit auf die Stirnseite der Schubladenzarge aufgesetzter Frontplatte samt zugehörigem Beschlagteil.

Die Fig. 1 zeigt die Situation bei einem Innenauszug, bei der vor der Frontwand 1 einer mit seitlichen Schubladenzargen 2 versehenen Schublade (Boden nicht dargestellt) eine gesonderte Frontblende 3, beispielsweise eine Kastentür, vorgesehen ist. Die Schublade ist auf einer am Korpus 4 befestigten Korpusschiene 5 nach vorne ausziehbar, wenn die Frontblende 3 geöffnet ist.

Es ist ein Verbindungsbeschlag 6 vorgesehen, über den die Schubladenzarge 2 im vorderen Bereich seitlich mit der im montierten Zustand zwischen den beiden Schubladenzargen liegenden Frontwand 1 rasch und einfach verbindbar ist. Die zur gezeigten Schubladenzarge 2 parallele Schubladenzarge, die die andere Seitenwand der Schublade bildet, ist allerdings in Fig. 1 nicht dargestellt. Die Fig. 1 dient als übersichtsfigur zur Verdeutlichung der Situation bei einem Innenauszug, in der aber wesentliche Merkmale der Erfindung noch nicht ersichtlich sind.

Das in den Fig. 2 bis 4 dargestellte Ausführungsbeispiel weist als Schubladenzarge eine Hohlprofil-Aluminiumzarge 2 auf, an der oben eine Zargenschiene 2a für eine am Korpus 4 gelagerte Laufrolle 7 ausgebildet ist. Zum gezeigten Einfachauszug gehört noch die an der Schubladenzarge 2 gelagerte Laufrolle 8 und die zugehörige Korpusschiene 5. Die Schublade besteht weiters aus einem vom Schenkel 2b der Schubladenzarge 2 getragenen Boden 9, der in Fig. 3 nicht näher gezeigt ist, einer Rückwand 10 und einer Frontwand 1, die auf die im folgenden noch näher beschriebene Weise lösbar mit der Schubladenzarge 2 verbunden werden kann.

Zur lösbaren Verbindung der Frontwand 1 mit der Schubladenzarge 2 ist der im vorliegenden Ausführungsbeispiel im wesentlichen zweiteilig ausgebildete Verbindungsbeschlag 6a, 6b vorgesehen. Einen Teil bildet der mit der Frontwand 1 vormontierbare Beschlagteil 6a, welcher durch Bewegung in Zargenlängsrichtung (Pfeil 11, Fig. 3) von der Stirnseite der Schubladenzarge 2 aus in die Schubladenzarge 2 einschiebbar ist. In der Schubladenzarge 2 ist die allgemein mit 6b bezeichnete Spannvorrichtung des Verbindungsbeschlages angeordnet, die dazu geeignet ist, den Beschlagteil 6a gegen die Stirnseite 25 der Schubladenzarge 2 zu ziehen, wobei die erfindungsgemäß seitlich neben der Frontwand 1 liegenden Anschläge 26 an dieser Stirnseite 25 satt zur Anlage kommen und damit eine spielfreie, feste Verbindung Zarge – Frontplatte sicherstellen. Im einzelnen weist der Beschlagteil 6a einen Vorsprung 12 mit zwei seitlich abstehenden Nasen 13 auf. Beim Einschieben des Vorsprunges 12 drücken die Nasen 13 zunächst die Federzunge 14 beiseite. In der Folge dringen die Nasen 13 in die Öffnung 14' der Federzunge 14 ein und diese schnappt hinter den Nasen 13 auf den Vorsprung 12 hinunter. Damit ist der Beschlagteil 6a samt Frontwand 1 provisorisch mit der Schubladenzarge 2 verbunden. Durch Betätigen des Spannexzenters 15, beispielsweise mittels eines Schraubenziehers, ist die Federzunge 14 nach innen bewegbar, wobei sie die von ihr hintergriffenen Nasen 13 nach innen mitnimmt und somit den gesamten Beschlagteil 6a fest zur Schubladenzarge 2 zieht.

Zum Lösen der Verbindung Beschlagteil 6a – Schubladenzarge 2 wird zunächst der Spannexzenter 15 gelöst und hierauf die Federzunge 14 angehoben (beispielsweise mittels eines Schraubenziehers durch eine Öffnung in der Außenwand der Schubladenzarge), sodaß die Nasen 13 nach außen passieren können.

Um eine ausgesprochen stabile Verbindung des Beschlagteiles 6a mit der Schubladenzarge 2 zu erhalten, weist dieser eine der Innenfläche der Schubladenzargen 2 zugewandte Anlagefläche 16 auf, die im montierten Zustand (siehe Fig. 3) satt an der Innenfläche der Schubladenzarge 2 anliegt.

Die Frontwand 1 wird bei der Vormontage in eine vertikale Nut 17 des Beschlagteiles 6a eingesetzt und darin mittels Schrauben 18 verschraubt.

Der Beschlagteil 6a weist vorne eine hier einstückig mit ihm ausgebildete Abdeckplatte 27 auf, die im montierten Zustand die Stirnseite 25 der zugehörigen Schubladenzarge 2 verdeckt und damit die Spannvorrichtung 6b vor Verschmutzung schützt und außerdem den optischen Eindruck der Schublade verbessert. Die Anschläge 26 sind an der Hinterseite dieser Abdeckplatte 27 ausgebildet. Vorne deckt die Abdeckplatte 27 auch noch einen kleinen Teil der Frontwand 1 selbst ab.

Die Schublade kann oben eine strichliert dargestellte Reling 19 aufweisen, die über Relinghalter gehalten ist. Die vorderen Relinghalter 20 können dabei an den Beschlagteilen 6a ausgebildet oder angebracht sein, während die hinteren Relinghalter 21 beispielsweise an einer nach oben verlängerten Rückwand 10 ausgebildet oder angebracht sein können.

Für die als Innenauszug ausgebildete Schublade lassen sich bei Verwendung des erfindungsgemäß vorgesehenen Verbindungbeschlages 6a, 6b genau dieselben Schubladenzargen verwenden als beim anderen Schubladentyp, bei dem die Frontwand stirnseitig auf die Schubladenzargen aufgesetzt ist und sich in vielen Fällen seitlich über die Schubladenbreite hinaus erstreckt. Auch der sonstige Aufbau der Schublade (bis allenfalls auf einen kürzeren Boden), sowie die im Korpus vorgebohrten Löcher für die zu den Schubladenzargen gehörigen Korpusschienen 5 können gleich sein wie bei diesem anderen Schubladentyp.

Das in den Figuren 5 bis 7 dargestellte Ausführungsbeispiel unterscheidet sich von dem in den Figuren 2 bis 4 gezeigten im wesentlichen durch eine Z-förmig profilierte Stahlzarge 2 anstelle der dortigen Hohlprofil-Aluminiumzarge und durch einen anders ausgebildeten Verbindungsbeschlag. Für gleiche oder äquivalente Teile sind dieselben Bezugsziffern verwendet wie in den Figuren 1 bis 4.

Der Beschlagteil 6a weist eine rechtwinkelig zur Frontwand 1 verlaufende vertikale Haltefläche 22 auf, die auf der Innenseite des vertikalen Steges der Stahlzarge 2 zur Anlage kommt. Über die Schrauben 28 ist die Klemmplatte 24 zunächst lose mit dem Beschlagteil 6a verbunden, sodaß sie nicht verlorengehen kann. Der über die Schrauben 18 vormontierte Beschlagteil 6a wird zur Montage der Frontwand 1 samt der lose damit verbundenen Klemmplatte 23 von der Stirnseite aus in Zargenlängsrichtung auf den vertikalen Steg der Stahlzarge 2 aufgeschoben, wobei die Schraube 28 durch die stirnseitig offene Aussparung 30 verläuft. Nach erfolgtem Aufschieben zieht man die Schraube 28 an. Dabei dringt die an der Klemmplatte 23 ausgebildete Nase in die Öffnung 32 der Schubladenzarge 2 ein und stützt sich über die Schrägfläche 29 an der vorderen Kante der Öffnung 32 ab. Dabei entsteht auf die Klemmplatte 23 eine Zugkraft in Zargenlängsrichtung, die über die Schraube 28 und den L-förmig abgewinkelten Schenkel 23" auf den Teil 6a' des Beschlagteiles 6a übertragen wird. Dieser Teil 6a' weist an seinem Ende den erfindungsgemäß angeordneten Anschlag 26 auf, der gegen die Stirnseite der Zarge 2 gezogen wird und damit die feste Verbindung Zarge 2 – Beschlagteil 6a bzw. letztlich Zarge 2 – Frontwand 1 sicherstellt. Beim gezeigten Ausführungsbeispiel ist vorne noch ein plattenförmiger Abdeckteil 6a″ vorgesehen, der die Schubladenzarge 2 samt dem dahinterliegenden Verbindungsmechanismus stirnseitig abdeckt. Der Beschlagteil 6a und die Klemmplatte 23 bestehen günstigerweise aus Kunststoff oder einem Metall, wie beispielsweise Zinkdruckguß.

In Fig. 7 sind weiters zwei verschiedene Bodenhalter 31 bzw. 31′ zu sehen, von denen der eine 31 für einen dickeren Boden 9 und der andere für einen dünneren Boden 9′ (Hartfaserboden) gedacht ist.

Das in den Figuren 8 bis 10 dargestellte Ausführungsbeispiel ist dem in den Figuren 5 bis 7 im Prinzip sehr ähnlich. Allerdings sind in den Figuren 8 bis 10 die konstruktiven Details der Verbindung Frontwand-Schubladenzarge nicht genauer dargestellt. Gut ersichtlich ist insbesondere die Lage der Schublade im Korpus 4 hinter der Frontblende 3, die Anbringung der Reling 19 sowie die Abdeckung der Stirnseite der Schubladenzarge 2 durch den vorne plattenförmigen Beschlagteil 6a.

Besonders vorteilhaft an der erfindungsgemäßen Verbindung Frontwand-Schubladenzarge ist die Tatsache, daß dieselben Schubladenzargen 2 verwendet werden können die auch zur Anbringung einer stirnseitig auf sie aufgesetzten Frontplatte geeignet sind. Dies ist anhand eines Vergleiches der Fig. 3 mit der Fig. 11 ersichtlich, in denen beidesmal dieselbe Schubladenzarge 2 mit Spannvorrichtung 6b (Federzunge 14, Spannexzenter 15) verwendet ist, und zwar in Fig. 3 für einen Innenauszug mit dem erfindungsgemäßen Beschlagteil 6a und in Fig. 11 für eine stirnseitig aufgesetzte Frontplatte 101, an der mittels Schrauben 135 ein Beschlagteil 106a vormontiert ist. Dieser Beschlagteil 106a weist einen Vorsprung 112 mit einer seitlich abstehenden Nase 113 auf und ist in Pfeilrichtung 111 von der Stirnseite aus in die Schubladenzarge 2 einsetzbar. Dabei hintergreift die Federzunge 14 die Nase 13 und zieht den Beschlagteil 6a durch Betätigung des Spannexzenters 15 in die Schubladenzarge 2, bis die an der Hinterseite der Frontplatte 101 ausgebildeten Anschläge 126 satt an den Stirnseiten 25 der Schubladenzarge 2 anliegen.

Bei der weiteren Ausführungsform der Erfindung gemäß Anspruch 17 sind Beschlagteile paarweise an einem Frontelement (Frontwand 1 bzw. Frontplatte 101) einer Schublade vorzumontieren und mit den beiden Schubladenzargen der Schublade verbindbar wobei ein Satz von mindestens zwei verschiedenartigen Beschlagteilpaaren, die zur Verbindung mit den gleichen Schubladenzargen geeignet sind vorgesehen ist, bestehend aus:

a) mindestens einem Paar von ersten Beschlagteilen 106a zur Verbindung einer auf die Stirnseiten 25 der Schubladenzargen 2 aufgesetzten Frontplatte 101 mit den Schubladenzargen 2 (Fig. 11) und aus

b) mindestens einem Paar von zweiten Beschlagteilen 6a zur Verbindung einer im montierten Zustand hinter den Stirnseiten 25 der Schubladenzargen zwischen diesen Schubladenzargen 2 liegenden Frontwand 1 mit diesen Schubladenzargen 2, wobei diese zweiten Beschlagteile 6a zumindest einen im wesentlichen seitlich neben der Frontwand 1 liegenden Anschlag 26 aufweisen, der durch eine Spanneinrichtung 6b ; 23, 28, 29 zum festen Verbinden der Frontwand 1 mit den Schubladenzargen 2 im wesentlichen Zargenlängsrichtung gegen die Stirnseite 25 der jeweiligen Schubladenzarge 2 ziehbar ist (Fig. 3).

Jedes Paar besteht dabei aus einem links und rechts an der Frontwand 1 bzw. Frontplatte 101 vorzumontierenden Beschlagteil 6a bzw. 106a. Die ersten und zweiten Beschlagteile passen auf dieselbe Schubladenzarge, sodaß hinsichtlich der Schubladenzarge keine Unterscheidung hinsichtlich Innenauszug und stirnseitig aufgesetzter Frontplatte mehr nötig ist. Als erste Beschlagteile können auch bereits bekannte Beschlagteile verwendet werden.

Die erfindungsgemäße Schublade kann selbstverständlich auch als Schublade verwendet werden, die keinen Innenauszug darstellt, die also nicht durch eine zusätzliche Frontblende abgedeckt ist. Schließlich ist die erfindungsgemäße Schublade nicht auf die gezeigten Einfachauszüge beschränkt. Natürlich sind auch Vollauszüge möglich, bei denen die in der Zargenschiene laufende Laufrolle beispielsweise auf einer ausziehbaren Mittelschiene drehbar gelagert ist.

**Ansprüche**

1. Schublade mit zwei parallelen Schubladenzargen, insbesondere aus Metall, die im wesentlichen die beiden Seitenwände der Schublade bilden und die jeweils eine Zargenschiene für eine Laufrolle eines Schubladenauszuges aufweisen bzw. tragen, und mit einer lösbar mit den Schubladenzargen verbindbaren Frontwand, die im montierten Zustand hinter den Stirnseiten der Schubladenzargen zwischen den Schubladenzargen liegt, dadurch gekennzeichnet, daß pro Schubladenzarge (2) ein Verbindungsbeschlag (6) mit einem an der Frontwand (1) vormontierten Beschlagteil (6a) vorgesehen ist, der zumindest einen, im wesentlichen seitlich neben der Frontwand (1) liegenden Anschlag (26) aufweist, und daß pro Schubladenzarge (2) eine Spanneinrichtung (6b, 23, 28, 29) vorgesehen ist, über die eine im wesentlichen in Zargenlängseinrichtung gerichtete Zugkraft auf das an der Frontwand (1) vormontierte Beschlagteil (6a) ausgeübt wird, wobei dessen Anschlag (26) bzw.

Anschläge (26) gegen die Stirnseite (25) der jeweiligen Schubladenzarge (2) gezogen wird bzw. werden.

2. Schublade nach Anspruch 1, dadurch gekennzeichnet, daß der Anschlag bzw. die Anschläge (26) des vormontierten Beschlagteiles (6a) im wesentlichen seitlich neben der Vorderfläche der Frontwand (1) liegt bzw. liegen.

3. Schublade nach Anspruch 1 oder 2, dadurch gekennzeichnet, daß der mit der Frontwand (1) verbundene Beschlagteil (6a) von der Stirnseite der Schubladenzarge (2) aus im wesentlichen in Zargenlängsrichtung (11) auf die zugehörige Schubladenzarge (2) aufschiebbar bzw. in diese einschiebbar und hierauf durch die Spanneinrichtung (6b ; 23, 28, 29) gegen die Stirnseite (25) der jeweiligen Schubladenzarge (2) ziehbar ist, wobei der Anschlag (26) bzw. Anschläge (26) des Beschlagteiles (6a) an der Stirnseite (25) der jeweiligen Schubladenzarge (2) satt zur Anlage kommt bzw. kommen.

4. Schublade nach Anspruch 3, dadurch gekennzeichnet, daß beide links bzw. rechts mit der Frontwand (1) verbundenen Beschlagteile (6a) gleichzeitig in die Verbindungsstellung mit der jeweiligen Schubladenzarge (2) bewegbar sind.

5. Schublade nach einem der Ansprüche 1 bis 4, dadurch gekennzeichnet, daß an bzw. in jeder der Schubladenzargen (2) eine Spannvorrichtung (6b) angeordnet ist, mittels derer der mit der Frontwand vormontierte Beschlagteil (6a) bzw. dessen seitlicher Anschlag (26) gegen die Stirnseite (25) der Schubladenzarge (2) ziehbar ist, wobei der Beschlagteil (6a) vor diesem Heranziehen in seiner lage gegenüber der zugehörigen Schubladenzarge (2) vorzugsweise verstellbar ist.

6. Schublade nach Anspruch 5, dadurch gekennzeichnet, daß der mit der Frontwand (1) vormontierte Beschlagteil (6a) mindestens einen Vorsprung (12) mit wenigstens einer seitlich von diesem abstehenden Nase (13) aufweist, der im wesentlichen im rechten Winkel zur Frontwand (1) verläuft und der von der Stirnseite der Schubladenzarge (2) her in diese einsetzbar ist, wobei eine über einen in der Schubladenzarge (2) vorgesehenen Spannexzenter (15) in Zargenlängsrichtung (11) ziehbare Federzunge (14) die Nase(n) (13) des Vorsprunges (12) des Beschlagteiles (6a) hintergreift und den Beschlagteil (6a) samt Anschlag (26) zur Schubladenzarge (2) zieht.

7. Schublade nach einem der Ansprüche 1 bis 5, dadurch gekennzeichnet, daß der mit der Frontwand (1) vormontierte Beschlagteil (6a) eine im wesentlichen rechtwinkelig zur Frontwand (1) verlaufende vertikale Haltefläche (22) aufweist, daß als Spannvorrichtung im wesentlichen eine Klemmplatte (23) vorgesehen ist, welche durch eine Öffnung oder Aussparung (30) im vertikalen Steg einer im wesentlichen Z-förmig profilierten Schubladenzarge (2) mit dem auf der anderen Seite des Steges mit der Haltefläche (22) am Steg anliegenden Beschlagteil (6a) verschraubbar ist, wobei sich eine an der Klemmplatte (23) ausgebildete Schrägfläche (29) an der Schubladenzarge (2) abstützt und damit eine im wesentlichen in Zargenlängsrichtung wirkende Kraft auf die Klemmplatte (23) bzw. den Beschlagteil (6a) ausübt.

8. Schublade nach Anspruch 7, dadurch gekennzeichnet, daß die Klemmplatte (23) über die zum Zusammenschrauben mit dem Beschlagteil (6a) vorgesehene Schraube (28) bereits vor dem Einsetzen der Frontwand (1) zwischen die Schubladenzargen (2) lose an diesem Beschlagteil (6a) gehalten ist.

9. Schublade nach Anspruch 7 oder 8, dadurch gekennzeichnet, daß die Klemmplatte (23) L-förmig abgewinkelt ist und mit dem abgewinkelten Schenkel (23') den den Anschlag (26) aufweisenden Teil (6a') des Beschlagteiles (6a) hintergreift und gegen die Stirnseite (25) der Schubladenzarge (2) zieht.

10. Schublade nach einem der Ansprüche 1 bis 9, dadurch gekennzeichnet, daß der Beschlagteil (6a) eine – im montierten Zustand – quer zur Zargenlängsrichtung weisende Vertiefung (17) zur Aufnahme der Frontwand (1) aufweist, wobei die Frontwand (1) in dieser Vertiefung (17) vorzugsweise festschraubbar ist.

11. Schublade nach Anspruch 10, dadurch gekennzeichnet, daß die Vertiefung eine vertikale Nut (17) ist.

12. Schublade nach einem der Ansprüche 1 bis 11, dadurch gekennzeichnet, daß der an der Frontwand (1) vormontierte Beschlagteil (6a) eine der Innenfläche der Schubladenzarge (2) zugewandte Anlagefläche (16) aufweist, die im montierten Zustand satt an der Innenfläche der Schubladenzarge (2) anliegt.

13. Schublade nach einem der Ansprüche 1 bis 12, dadurch gekennzeichnet, daß der Verbindungsbeschlag (6 bzw. 6a) im montierten Zustand die Stirnseite der zugehörigen Schubladenzarge (2) in an sich bekannter Weise abdeckt.

14. Schublade nach Anspruch 13, dadurch gekennzeichnet, daß der an der Frontwand (1) vormontierte Beschlagteil (6a) vorne eine Abdeckplatte (27) aufweist, die im montierten Zustand die Schubladenzargen stirnseitig und vorzugsweise einen Teil der Frontwand (1) selbst abdeckt.

15. Schublade nach Anspruch 14, dadurch gekennzeichnet, daß der Anschlag (26) an der Hinterseite der Abdeckplatte (27) ausgebildet ist.

16. Schublade nach einem der Ansprüche 1 bis 15, dadurch gekennzeichnet, daß der Verbindungsbeschlag (6 bzw. 6a) einen nach oben weisenden Aufbau (20) zur Befestigung einer Reling (19) trägt bzw. aufweist.

17. Beschlagteile, die paarweise an einem Frontelement einer Schublade vorzumontieren sind und mit den beiden Schubladenzargen der Schublade verbindbar sind, gekennzeichnet durch einen Satz von mindestens zwei verschiedenartigen Beschlagteilpaaren, die zur Verbindung mit den gleichen Schubladenzargen geeignet sind, wobei dieser Satz besteht aus :

a) mindestens einem Paar von ersten Beschlagteilen (106a) zur Verbindung einer auf die Stirnseiten (25) der Schubladenzargen (2) aufgesetzten Frontplatte (101) mit den Schubladenzargen (2), und aus

b) mindestens einem Paar von zweiten Beschlagteilen (6a) zur Verbindung einer im montierten Zustand hinter den Stirnseiten (25) der Schubladenzargen zwischen diesen Schubladenzargen (2) liegenden Frontwand (1) mit diesen Schubladenzargen (2), wobei diese zweiten Beschlagteile (6a) zumindest einen im wesentlichen seitlich neben der Frontwand (1) liegenden Anschlag (26) aufweisen, der durch eine Spanneinrichtung (6b ; 23, 28, 29) zum festen Verbinden der Frontwand (1) mit den Schubladenzargen (2) im wesentlichen in Zargenlängrichtung gegen die Stirnseite (25) der jeweiligen Schubladenzarge (2) ziehbar ist.

18. Beschlagteile nach Anspruch 17, dadurch gekennzeichnet, daß der Anschlag bzw. die Anschläge (26) der zweiten Beschlagteile (6 a) im wesentlichen seitlich neben der Vorderfläche der Frontwand (1) liegt bzw. liegen.

19. Beschlagteile nach Anspruch 17 oder 18, dadurch gekennzeichnet, daß die mit der Frontwand (1) vormontierten zweiten Beschlagteile (6a) jeweils eine im wesentlichen rechtwinkelig zur Frontwand (1) verlaufende vertikale Haltefläche (22) aufweisen, die mit einer als Spannvorrichtung dienenden Klemmplatte (23) zusammenwirkt, welche durch eine Öffnung oder Aussparung (30) im vertikalen Steg einer im wesentlichen Z-förmig profilierten Schubladenzarge (2) mit dem auf der anderen Seite des Steges mit der Haltefläche (22) am Steg anliegenden Beschlagteil (6a) verschraubbar ist, wobei sich eine an der Klemmplatte (23) ausgebildete Schrägfläche (29) an der Schubladenzarge (2) abstützt und damit eine im wesentlichen in Zargenlängsrichtung wirkende Kraft auf die Klemmplatte (23) bzw. den zweiten Beschlagteil (6a) ausübt, wobei die Klemmplatte (23) vorzugsweise L-förmig abgewinkelt ist und mit dem abgewinkelten Schenkel (23') den den Anschlag (26) aufweisenden Teil (6a') des Beschlagteiles (6a) hintergreift und gegen die Stirnseite (2S) der Schubladenzarge (2) zieht.

20. Beschlagteile nach einem der Ansprüche 17 bis 19, dadurch gekennzeichnet, daß die zweiten Beschlagteile (6a) jeweils eine – im montierten Zustand – quer zur Zargenlängsrichtung weisende Vertiefung (17) zur Aufnahme der Frontwand (1) aufweisen, wobei die Frontwand (1) in dieser Vertiefung (17) vorzugsweise festschraubbar ist.

21. Beschlagteile nach Anspruch 20, dadurch gekennzeichnet, daß die Vertiefung eine vertikale Nut ist.

22. Beschlagteile nach einem der Ansprüche 17 bis 21, dadurch gekennzeichnet, daß die an der Frontwand (1) vormontierten zweiten Beschlagteile (6a) jeweils eine der Innenfläche der Schubladenzarge (2) zugewandte Anlagefläche (16) aufweisen, die im montierten Zustand satt an der Innenfläche der Schubladenzarge (2) anliegt.

23. Beschlagteile nach einem der Ansprüche 17 bis 22, dadurch gekennzeichnet, daß die an der Frontwand (1) vormontierten zweiten Beschlagteile (6 a) jeweils vorne eine Abdeckplatte (27) aufweisen, die im montierten Zustand die jeweilige Schubladenzarge (2) stirnseitig und vorzugsweise einen Teil der Frontwand (1) selbst abdeckt.

24. Beschlagteile nach Anspruch 23, dadurch gekennzeichnet, daß der Anschlag (26) jeweils an der Hinterseite der Abdeckplatte (27) ausgebildet ist.

25. Beschlagteile nach einem der Ansprüche 17 bis 24, dadurch gekennzeichnet, daß die zweiten Beschlagteile (6 a) jeweils einen nach oben weisenden Aufbau (20) zur Befestigung einer Reling (19) tragen bzw. aufweisen.

**Claims**

1. Drawer with two parallel drawer frames, consisting in particular of metal, which substantially form the two side walls of the drawer and which each comprise or support a frame track for a small roller of a drawer pull-out and with a front wall able to be connected detachably to the drawer frames, which front wall, in the assembled state, lies behind the front ends of the drawer frames between the drawer frames, characterised in that there is provided per drawer frame (2) one connecting fitting (6) with a fitting part (6a) pre-assembled on the front wall (1), which fitting part comprises at least one stop (26) located substantially laterally beside the front wall (1) and that one tensioning device (6b, 23, 28, 29) is provided per drawer frame (2), by which a tensile force directed substantially in the longitudinal direction of the frame is exerted on the fitting part (6a) pre-assembled on the front wall (1), its stop (26) or stops (26) being drawn towards the front end (25) of the respective drawer frame (2).

2. Drawer according to Claim 1, characterised in that the stop or stops (26) of the pre-assembled fitting part (6a) lies/lie substantially laterally beside the front surface of the front wall (1).

3. Drawer according to Claim 1 or 2, characterised in that the fitting part (6a) connected to the front wall (1) can be slid from the front side of the drawer frame (2) substantially in the longitudinal direction (11) of the frame onto the associated drawer frame (2) or slid into the latter and after this can be drawn by the tensioning device (6b ; 23, 28, 29) towards the front end (25) of the respective drawer frame (2), the stop (26) or stops (26) of the fitting part (6a) coming to bear flush against the front end (25) of the respective drawer frame (2).

4. Drawer according to Claim 3, characterised in that both fitting parts (6a) connected to the front wall (1) on the left or right hand side can be moved simultaneously into the connecting position with the respective drawer frame (2).

5. Drawer according to one of Claims 1 to 4, characterised in that a tensioning device (6b) is located on or in each of the drawer frames (2), by means of which device the fitting part (6a) pre-assembled with the front wall or its lateral stop (26) can be drawn towards the front end (25) of the drawer frame (2), the fitting part (6a) preferably being adjustable with respect to the associated drawer frame (2), before it is drawn into its position.

6. Drawer according to Claim 5, characterised in that the fitting part (6a) pre-assembled with the front wall (1) comprises at least one projection (12) having at least one lug (13) projecting laterally therefrom, which lug extends substantially at right angles with respect to the front wall (1) and which can be inserted from the front end of the drawer frame (2) in the latter, a spring tongue (14) able to be drawn in the longitudinal direction of the frame (11) by way of a tensioning eccentric (15) provided in the drawer frame (2) engaging behind the lug(s) (13) of the projection (12) of the fitting part (6a) and drawing the fitting part (6a) together with the stop (26) towards the drawer frame (2).

7. Drawer according to one of Claims 1 to 5, characterised in that the fitting part (6a) pre-assembled with the front wall (1) comprises a vertical retaining surface (22) extending substantially at right angles to the front wall (1), that as the tensioning device substantially a clamping plate (23) is provided, which through an opening or recess (30) in the vertical web of a drawer frame (2) having a substantially Z-shaped profile can be screwed to the fitting part (6a) bearing against the web by the retaining surface (22) on the other side of the web, an inclined surface (29) constructed on the clamping plate (23) being supported on the drawer frame (2) and thus exerting a force acting substantially in the longitudinal direction of the frame on the clamping plate (23) or on the fitting part (6a).

8. Drawer according to Claim 7, characterised in that the clamping plate (23) is held by way of the screw (28) provided for screwing to the fitting part (6a), loosely against this fitting part (6a) before the insertion of the front wall (1) between the drawer frames (2).

9. Drawer according to Claim 7 or 8, characterised in that the clamping plate (23) is bent in a L-shape and engages by the bent side (23') behind the parts (6a') of the fitting part (6a) comprising the stop (26) and pulls towards the front end (25) of the drawer frame (2).

10. Drawer according to one of Claims 1 to 9, characterised in that the fitting part (6a) comprises a recess (17) for receiving the front wall (1), which recess is directed transversely with respect to the longitudinal direction of the frame – in the assembled state –, the front wall (1) preferably being able to be screwed securely in this recess (17).

11. Drawer according to Claim 10, characterised in that the recess is a vertical groove (17).

12. Drawer according to one of Claims 1 to 11, characterised in that the fitting part (6a) pre-assembled on the front wall (1) comprises a stop face (16) facing the inner surface of the drawer frame (2), which stop face, in the assembled state, bears flush against the inner surface of the drawer frame (2).

13. Drawer according to one of Claims 1 to 12, characterised in that in the assembled state, the connecting fitting (6 or 6a) covers the front end of the associated drawer frame (2) in manner known per se.

14. Drawer according to Claim 13, characterised in that the fitting part (6a) pre-assembled on the front wall (1) comprises at the front a cover plate (27), which in the assembled state itself covers the drawer frames at the front end and preferably part of the front wall (1).

15. Drawer according to Claim 14, characterised in that the stop (26) is constructed on the rear side of the cover plate (27).

16. Drawer according to one of Claims 1 to 15, characterised in that the connecting fitting (6 or 6a) supports or comprises a structure (20) pointing upwards for the attachment of a rail (19).

17. Fitting parts, which can be pre-assembled in pairs on a front member of a drawer and can be connected to the two drawer frames of the drawer, characterised by a set of at least two different pairs of fitting parts, which are suitable for connection to the same drawer frames, this set consisting of :

a) at least one pair of first fitting parts (106a) for connecting a front plate (101) fitted on the front ends (25) of the drawer frames (2), to the drawer frames (2), and of

b) at least one pair of second fitting parts (6a) for connecting a front wall (1) lying, in the assembled state, behind the front ends (25) of the drawer frames, between these drawer frames (2), to these drawer frames (2), these second fitting parts (6a) comprising at least one stop (26) lying substantially laterally beside the front wall (1), which can be drawn by a tensioning device (6b ; 23, 28, 29) for secure connection of the front wall (1) to the drawer frames (2), substantially in the longitudinal direction of the frames towards the front end (25) of the respective drawer frame (2).

18. Fitting parts according to Claim 17, characterised in that the stop or stops (26) of the second fitting parts (6a) lies, lie substantially laterally beside the front surface of the front wall (1).

19. Fitting parts according to Claim 17 or 18, characterised in that the second fitting parts (6a) pre-assembled with the front wall (1) respectively comprise a vertical retaining surface (22) extending substantially at right angles to the front wall (1), which surface (22) cooperates with a clamping plate (23) serving as a tensioning device, which clamping plate can be screwed through an opening or recess (30) in the vertical web of a drawer frame (2) having a substantially Z-shaped profile, to the fitting part (6a) bearing against the web on the other side of the web by the retaining surface (22), an inclined surface (29) constructed on the clamping plate (23) being supported on the drawer frame (2) and thus exerting a force acting substantially in the longitudinal direction of the frame, on the clamping plate (23) or the second fitting part (6a), the clamping plate (23) preferably being bent in a L-shape and engaging by the bent side (23') behind the part (6a') of the fitting part (6a) comprising the stop (26) and drawing towards the front end (25) of the drawer frame (2).

20. Fitting parts according to one of Claims 17 to 19, characterised in that the second fitting parts (6a) each comprise a recess (17) for receiving the front wall (1), pointing transversely to the longitudinal direction of the frame – in the assembled state –, the front wall (1) preferably being able to be screwed securely in this recess (17).

21. Fitting parts according to Claim 20, characterised in that the recess is a vertical groove.

22. Fitting parts according to one of Claims 17 to 21, characterised in that the second fitting parts (6a) pre-assembled on the front wall (1) respectively comprise a contact surface (16) facing the inner surface of the drawer frame (2), which contact surface, in the assembled state, bears flush against the inner surface of the drawer frame (2).

23. Fitting parts according to one of Claims 17 to 22, characterised in that the second fitting parts (6a) pre-assembled on the front wall (1) respectively comprise a cover plate (27) at the front, which in the assembled state itself covers the respective drawer frame (2) on the front side and preferably part of the front wall (1).

24. Fitting parts according to Claim 23, characterised in that the stop (26) is respectively constructed on the rear side of the cover plate (27).

25. Fitting parts according to one of Claims 17 to 24, characterised in that the second fitting parts (6a) respectively support or comprise a structure (20) pointing upwards for the attachment of a rail (19).

## Revendications

1. Tiroir comprenant deux panneaux de tiroir parallèles, en particulier en métal, qui forment essentiellement les deux parois latérales du tiroir et présentent ou portent chacun un rail pour un galet de roulement d'un mécanisme d'extraction de tiroir, et une paroi frontale qui peut être assemblée de manière amovible avec les panneaux de tiroir et se trouve, en position montée, derrière les côtés frontaux des panneaux de tiroir entre lesdits panneaux, caractérisé en ce que par panneau de tiroir (2), il est prévu une ferrure d'assemblage (6) comprenant une pièce de ferrure (6a) qui est montée préalablement sur la paroi frontale (1) et présente au moins une butée (26) se trouvant essentiellement latéralement à côté de la paroi frontale (1) et en ce que par panneau de tiroir (2), il est prévu un dispositif de serrage (6b, 23, 28, 29) par l'intermédiaire duquel une force de traction orientée essentiellement dans la direction longitudinale des panneaux est exercée sur la pièce de ferrure (6a) montée préalablement sur la paroi frontale (1), la butée (26) ou les butées (26) de ladite pièce de ferrure étant tirée(s) vers le côté frontal (25) du panneau de tiroir (2) considéré.

2. Tiroir selon la revendication 1, caractérisé en ce que la butée ou les butées (26) de la pièce de ferrure (6a) montée préalablement se trouve(nt) essentiellement latéralement à côté de la surface avant de la paroi frontale (1).

3. Tiroir selon la revendication 1 ou 2, caractérisé en ce que la pièce de ferrure (6a) reliée à la paroi frontale (1) peut, à partir du côté frontal du panneau de tiroir (2), coulisser essentiellement dans la direction longitudinale (11) des panneaux sur ou dans le panneau de tiroir (2) correspondant et y être tirée par le dispositif de serrage (6b ; 23, 28, 29) vers le côté frontal (25) du panneau de tiroir (2) considéré, la butée (26) ou les butées (26) de la pièce de ferrure (6a) venant prendre appui bien à plat contre le côté frontal (25) du panneau de tiroir (2) considéré.

4. Tiroir selon la revendication 3, caractérisé en ce que les deux pièces de ferrure (6a) reliées à la paroi frontale (1) à gauche et à droite peuvent être déplacées simultanément dans la position d'assemblage avec le panneau de tiroir (2) considéré.

5. Tiroir selon l'une des revendications 1 à 4, caractérisé en ce qu'un dispositif de serrage (6b) est disposé sur ou dans chaque panneau de tiroir (2) à l'aide duquel la pièce de ferrure (6a) montée préalablement sur la paroi frontale ou sa butée latérale (26) peut être tirée vers le côté frontal (25) du panneau de tiroir (2), la pièce de ferrure (6a) pouvant de préférence être réglée dans sa position par rapport au panneau de tiroir (2) correspondant avant d'être amenée par traction.

6. Tiroir selon la revendication 5, caractérisé en ce que la pièce de ferrure (6a) montée préalablement sur la paroi frontale (1) présente au moins une saillie (12) qui comporte au moins un nez (13) dépassant latéralement de ladite saillie, s'étend essentiellement à angle droit par rapport à la paroi frontale (1) et peut être insérée à partir du côté frontal du panneau de tiroir (2) dans ledit panneau, une languette à ressort (14) qui peut être tirée dans la direction longitudinale (11) des panneaux par un excentrique de serrage (15) prévu dans le panneau de tiroir (2) agissant par l'arrière sur le(s) nez (13) de la saillie (12) de la pièce de ferrure (6a) et tirant la pièce de ferrure (6a) avec la butée (26) vers le panneau de tiroir (2).

7. Tiroir selon l'une des revendications 1 à 5, caractérisé en ce que la pièce de ferrure (6a) montée préalablement sur la paroi frontale (1) présente une surface de maintien verticale (22) s'étendant essentiellement à angle droit par rapport à la paroi frontale (1), en ce que le dispositif de serrage est constitué essentiellement par une plaque de serrage (23) qui peut être vissée dans une ouverture ou une échancrure (30) réalisée dans une traverse verticale d'un panneau de tiroir (2) essentiellement profilé en Z, avec la pièce de ferrure (6a) prenant appui sur la traverse avec la surface de maintien (22) de l'autre côté de la traverse, une surface biseautée (29) réalisée sur la plaque de serrage (23) prenant appui sur le panneau de tiroir (2) et exerçant ainsi une force agissant essentiellement dans la direction longitudinale des panneaux sur la plaque de serrage (23) et sur la pièce de ferrure (6a).

8. Tiroir selon la revendication 7, caractérisé en ce que la plaque de serrage (23) est maintenue de manière lâche sur la pièce de ferrure (6a) par la vis (28) prévue pour l'assemblage avec cette pièce de ferrure (6a) avant même que la paroi frontale (1) soit insérée entre les panneaux de tiroir (2).

9. Tiroir selon la revendication 7 ou 8, caractérisé en ce que la plaque de serrage (23) est coudée en forme de L et agit avec l'aile coudée (23') par l'arrière sur la partie (6a') de la pièce de ferrure (6a) présentant la butée (26) et la tire vers le côté frontal (25) du panneau de tiroir (2).

10. Tiroir selon l'une des revendications 1 à 9, caractérisé en ce que la pièce de ferrure (6a) présente un creux (17) orienté, en position montée, transversalement à la direction longitudinale des panneaux et destiné à recevoir la paroi frontale (1), la paroi frontale (1) pouvant être de préférence vissée fixement dans ce creux (17).

11. Tiroir selon la revendication 10, caractérisé en ce que le creux est une encoche verticale (17).

12. Tiroir selon l'une des revendications 1 à 11, caractérisé en ce que la pièce de ferrure (6a) montée préalablement sur la paroi frontale (1) présente une surface d'appui (16) qui est tournée vers la surface intérieure du panneau de tiroir (2) et prend appui en position montée bien à plat sur la surface intérieure du panneau de tiroir (2).

13. Tiroir selon l'une des revendications 1 à 12, caractérisé en ce que la ferrure d'assemblage (6 et 6a) recouvre en position montée le côté frontal du panneau de tiroir (2) correspondant d'une manière en soi connue.

14. Tiroir selon la revendication 13, caractérisé en ce que la pièce de ferrure (6a) montée préalablement sur la paroi frontale (1) présente à l'avant une plaque de recouvrement (27) qui, en position montée, recouvre les panneaux de tiroir sur le côté frontal et de préférence une partie de la paroi frontale (1) elle-même.

15. Tiroir selon la revendication 14, caractérisé en ce que la butée (26) est réalisée sur le côté arrière de la plaque de recouvrement (27).

16. Tiroir selon l'une des revendications 1 à 15, caractérisé en ce que la ferrure d'assemblage (6 et 6a) porte et présente une structure (20) orientée vers le haut pour la fixation d'une rambarde (19).

17. Ferrures devant être montées préalablement par paires sur un élément frontal d'un tiroir et pouvant être assemblées avec les deux panneaux du tiroir, caractérisées par un jeu d'au moins deux paires de ferrures de nature différente qui sont prévues pour l'assemblage avec les mêmes panneaux de tiroir, ce jeu étant composé de :

a) au moins une paire de premières pièces de ferrures (106a) pour assembler une plaque frontale (101) montée sur les côtés frontaux (25) des panneaux de tiroir (2) avec les panneaux de tiroir (2), et

b) d'au moins une paire de deuxièmes pièces de ferrures (6a) pour assembler une paroi frontale (1) se trouvant en position montée derrière les côtés frontaux (25) des panneaux de tiroir, entre ces panneaux de tiroir (2) avec ces panneaux de tiroir (2), ces deuxièmes pièces de ferrures (6a) présentant au moins une butée (26) qui se trouve essentiellement latéralement à côté de la paroi frontale (1) et peut être tirée par un dispositif de serrage (6b ; 23, 28, 29) essentiellement dans la direction longitudinale des panneaux vers le côté frontal (25) du panneau de tiroir (2) considéré pour assembler fixement la paroi frontale (1) avec les panneaux de tiroir (2).

18. Ferrures selon la revendication 17, caractérisées en ce que la butée ou les butées (26) des deuxièmes pièces de ferrures (6a) se trouve(nt) essentiellement latéralement à côté de la surface avant de la paroi frontale (1).

19. Ferrures selon la revendication 17 ou 18, caractérisées en ce que les deuxièmes pièces de ferrures (6a) montées préalablement sur la paroi frontale (1) présentent chacune une surface de maintien verticale (22) qui s'étend essentiellement à angle droit par rapport à la paroi frontale (1) et coopère avec une plaque de serrage (23) qui sert de dispositif de serrage et peut être vissée dans une ouverture ou une échancrure (30) réalisée dans la traverse verticale d'un panneau de tiroir (2) essentiellement profilé en Z avec la pièce de ferrure (6a) prenant appui sur la traverse avec la surface de maintien (22) sur l'autre côté de la traverse, une surface biseautée (29) réalisée sur la plaque de serrage (23) prenant appui sur le panneau de tiroir (2) et exerçant ainsi une force agissant essentiellement dans la direction longitudinale des panneaux sur la plaque de serrage (23) et sur la pièce de ferrure (6a), la plaque de serrage (23) étant de préférence coudée en forme de L et agissant avec l'aile coudée (23') par l'arrière sur la partie (6a') de la pièce de ferrure (6a) présentant la butée (26) et la tirant vers le côté frontal (25) du panneau de tiroir (2).

20. Ferrures selon l'une des revendications 17 à 19, caractérisées en ce que les deuxièmes pièces de ferrure (6a) présentent un creux (17) orienté, en position montée, transversalement à la direction longitudinale des panneaux et destiné à recevoir la paroi frontale (1), la paroi frontale (1) pouvant être de préférence vissée fixement dans ce creux (17).

21. Ferrures selon la revendication 20, caractérisées en ce que le creux est une encoche verticale (17).

22. Ferrures selon l'une des revendications 17 à 21, caractérisées en ce que les deuxièmes pièces de ferrure (6a) montées préalablement sur la paroi frontale (1) présentent chacune une surface d'appui (16) qui est tournée vers la surface intérieure du panneau de tiroir (2) et prend appui en position montée bien à plat sur la surface intérieure du panneau de tiroir (2).

23. Ferrures selon l'une des revendications 17 à 22, caractérisées en ce que les deuxièmes pièces de ferrure (6a) montées préalablement sur la paroi frontale (1) présentent chacune à l'avant une plaque de recouvrement (27) qui, en position montée, recouvre le panneau de tiroir (2) considéré sur le côté frontal et de préférence une partie de la paroi frontale (1) elle-même.

24. Ferrures selon la revendication 23, caractérisées en ce que la butée (26) est réalisée sur le côté arrière de la plaque de recouvrement (27).

25. Ferrures selon l'une des revendications 17 à 24, caractérisées en ce que les deuxièmes pièces de ferrure (6a) portent et présentent chacune une structure (20) orientée vers le haut pour la fixation d'une rambarde (19).

Fig. 1

Fig. 2

Fig. 3

Fig. 4

Fig.5

Fig. 6

Fig. 7

Fig. 8

Fig. 9

Fig. 10

Fig. 11